# EUROPEAN PATENT SPECIFICATION

(11) **EP 3 126 239 B1**
(45) Date of publication and mention of the grant of the patent: **10.03.2021**
(21) Application number: 15720499.1
(22) Date of filing: 02.04.2015
(51) Int. Cl.: B64D 11/06

(54) **RECLINING PASSENGER SEAT**
VERSTELLBARER PASSAGIERSITZ
SIÈGE PASSAGER INCLINABLE

(30) Priority: 03.04.2014 US 201461974506 P
(43) Date of publication of application: 08.02.2017
(73) Proprietor: Safran Seats USA LLC, Gainesville, TX 76240 (US)
(72) Inventor: BUCHER, Andreas, Brackley Northants NN13 7XY (GB); ALLEN, John D., Gainesville, Texas 76240 (US); REYES, Raul G., Gainesville, Texas 76240 (US); MURNAN, Justin K., Gainesville, Texas 76240 (US); PARKER, Ty, Gainesville, Texas 76240 (US); KINARD, Marc W., Gainesville, Texas 76240 (US); SMITH, Josh T., Gainesville, Texas 76240 (US); DRISCOLL, Hollie C., Gainesville, Texas 76240 (US)
(74) Representative: Phillips & Leigh LLP
(86) International application number: PCT/US2015/024004
(87) International publication number: WO 2015/153840

(56) References cited:
- EP-A2- 1 057 725
- WO-A1-2008/107689
- US-A1- 2001 000 639
- US-A1- 2007 262 625
- US-A1- 2012 038 196
- US-B1- 6 305 644

## Description

### FIELD OF THE INVENTION

The field of the invention relates to reclining mechanisms and passenger seats for aircraft or the like.

### BACKGROUND

Many passenger seats such as those on passenger aircraft, buses, trains, and the like include mechanisms related to passenger comfort and convenience. For example, seat structural assemblies are designed to pivot, recline, or otherwise move to provide an ergonomic interface for passengers. The design of conventional seats along with the design of the recline mechanism may include inefficiencies that lead to reduced space for passenger.

In certain situations, it may be desirable to design seats and related recline mechanisms to maximize passenger space. Efficient seat and recline mechanism design facilitates advantageous ergonomics and passenger comfort. US 20120038196 A1 discloses an adjustable passenger seat having a seat recline mechanism and including a seat base having first and second non-intersecting seat path guide slots for guiding the travel of a translation guide assembly interconnected to a linear translating seat pan drive rail through the seat pan such that translational movement of the drive rail with respect to the seat base causes movement of the seat pan and the seat back between upright and flat seating positions. WO 2008107689 A1 discloses an aircraft seat, a squab and a backrest, both being movable, and a seat chassis, via which the seat can be fixed to a floor. A mechanism for moving the squab and the backrest has a linear runner mounted on the seat chassis and a seat frame sub-frame bearingly mounted on the linear runner. The squab is pivotally on the sub-frame substantially at its front edge and the backrest is pivotally mounted on the squab substantially at the back edge of the squab and the bottom of the backrest. A first cam track in a first cam track member fast with the seat chassis for adjusting the height of the back edge of the seat squab, the first cam track being generally parallel to the linear runner through the majority of its length and having a rearmost substantially vertical portion. US 6305644 B1 discloses a passenger seat configuration for an aircraft cabin having a fuselage wall with windows therein and an aisle for permitting movement within the cabin. The configuration includes an outboard seating unit for being positioned adjacent the fuselage wall of the aircraft, the outboard seating unit having a primary seat formed of a seat back and seat bottom, and a forwardly spaced-apart ottoman movable with respect to each other to define upright, semi-reclined and fully reclined positions. An inboard seating unit is provided for being positioned adjacent the at least one aisle and between the inboard seating unit and the aisle, the inboard seating unit having a primary seat formed of a seat back and a seat bottom, and a forwardly spaced-apart, free-standing ottoman movable with respect to each other to define upright, semi-reclined and fully reclined positions, the primary seat and ottoman of the inboard seating unit being positioned aft of the primary seat and ottoman of the outboard seating unit. US 20070262625 A1 discloses a seating unit comprising a fixed housing containing a primary seat with a reclinable back arranged to recline in such a manner that it remains within the housing. The seating unit is suitable for a aircraft cabin and may further comprise a leg-rest arranged to cooperate with the seating portion to form part of a substantially flat surface when the back is reclined in a substantially horizontal position. US 20010000639 A1 discloses a seat for, for example, an aircraft that has an open outer shell which embraces a seat portion, a seat back, a head rest and a foot rest when the seat is in an upright position. The seat is reclinable into a bed configuration such that the seat portion is moved forwardly out of the open end of the shell EP1057725 further discloses a passanger seat with all the features of the preamble of independent claim 1.

### SUMMARY

The terms "invention," "the invention," "this invention" and "the present invention" used in this patent are intended to refer broadly to all of the subject matter of this patent and the patent claims below. Statements containing these terms should be understood not to limit the subject matter described herein or to limit the meaning or scope of the patent claims below. Embodiments of the invention covered by this patent are defined by the claims below, not this summary. This summary is a high-level overview of various aspects of the invention and introduces some of the concepts that are further described in the Detailed Description section below. This summary is not intended to identify key or essential features of the claimed subject matter, nor is it intended to be used in isolation to determine the scope of the claimed subject matter. The subject matter should be understood by reference to appropriate portions of the entire specification of this patent, any or all drawings and each claim.

According to the invention, a passenger seat comprises: a seat bottom;a seat back; and a recline mechanism configured to move the passenger seat between an upright position and a reclined position said recline mechanism comprising a spreader, said spreader comprising a front roller track, a middle roller track and an upper roller track; wherein the seat bottom and the seat back comprise a plurality of corresponding rollers configured to interface with the front roller track, the middle roller track and an upper roller track so as to facilitate the seat bottom and the seat back to move in two directions; characterised in that the recline mechanism is configured such that when moving the passenger seat from an upright position to a reclined position, each of the rollers moves towards both a front and downward direction in their respective front roller track, middle roller track and upper roller track. In certain embodiments, the seat bottom comprises a front roller and a middle roller, the front roller interfaces with and slides through the front roller track and the middle roller which interfaces with and slides within the middle roller track, and the seat back comprises an upper roller which slides along the upper roller track.

In certain embodiments, the recline mechanism is configured to facilitate simultaneous movement of the corresponding rollers within the roller tracks.

In certain embodiments, the roller tracks comprise slots and each roller is configured to slide through one of the slots.

In certain embodiments, when moving from the reclined position to the upright position, the two directions are upward and toward the rear with respect to the passenger seat.

In certain embodiments, when in the reclined position, at least a portion of the passenger seat is located further forward in comparison to the upright position.

In certain embodiments, the roller tracks each comprise a curved motion path.

### BRIEF DESCRIPTION OF THE DRAWINGS

Fig. 1 is a perspective view of passenger seats according to certain embodiments of the present invention.
Fig. 2 is a side view of the passenger seats of Fig. 1.
Fig. 3 is a partial perspective view of the passenger seats of Fig. 1.
Fig. 4 is a perspective detail view of the passenger seats of Fig. 1.

### DETAILED DESCRIPTION

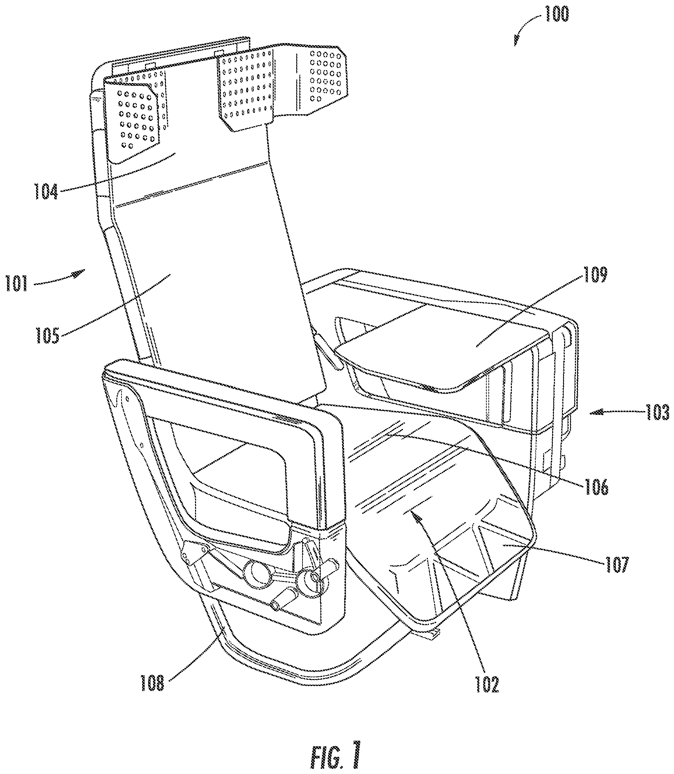

Figs. 1-4 illustrate embodiments of a passenger seat 100. In these embodiments, the passenger seat 100 comprises a back rest 101, a seat bottom 102, an arm rest assembly 103, and a seat base 108. The seat bottom 102 may be attached to an upper portion of the seat base 108. The back rest 101 may include a headrest portion 104 and a lower portion 105. The seat bottom 102 may include a seat pan 106 and a leg extension 107. In some not claimed embodiments, each seat 100 is independent of all other seats 100. In some not claimed embodiments, multiple seats 100 are formed together as a single unit to reduce manufacturing costs.

As shown in Fig. 1, the passenger seat 100 may include one or more arm rest assemblies 103 secured on one or both sides of the seat bottom 102. In some not claimed embodiments, the arm rest assembly 103 includes a deployable tray table 109 (shown in the deployed position in Fig. 1). In some not claimed embodiments, the tray table 109 is configured to fold into a cavity in arm rest assembly 103. The seat base 108 is attached to the underside of the seat bottom 102.

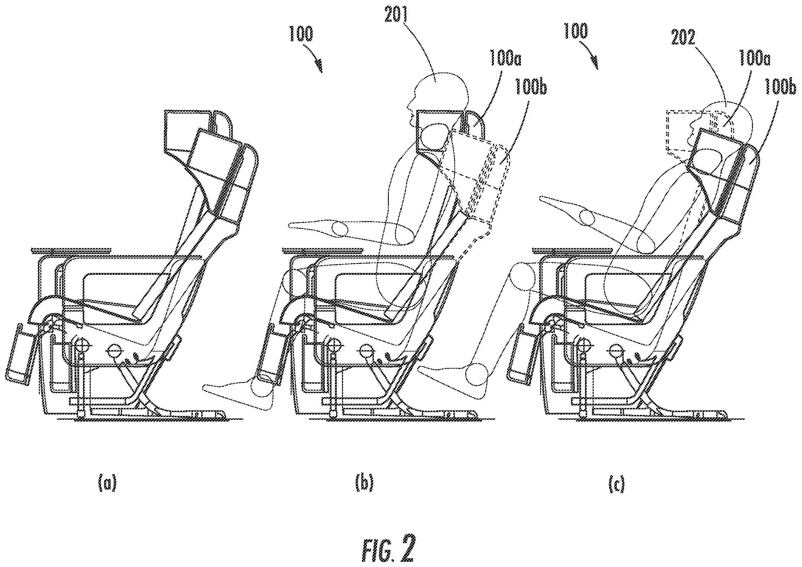

As shown in Fig. 2, the passenger seat 100 may move between an upright position 100a and a reclined position 100b. Fig. 2 shows three rows of seats, (a), (b), and (c). The seat in row (b) shows an upright passenger 201 sitting in the seat 100 while in the upright position 100a. The seat in row (c) shows a reclined passenger 202 sitting in the seat 100 while in the reclined position 100b.

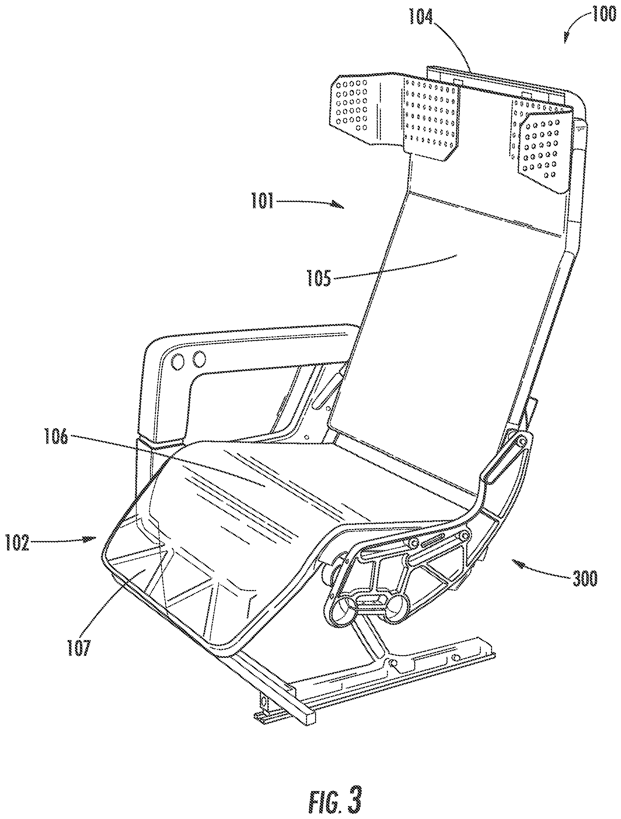

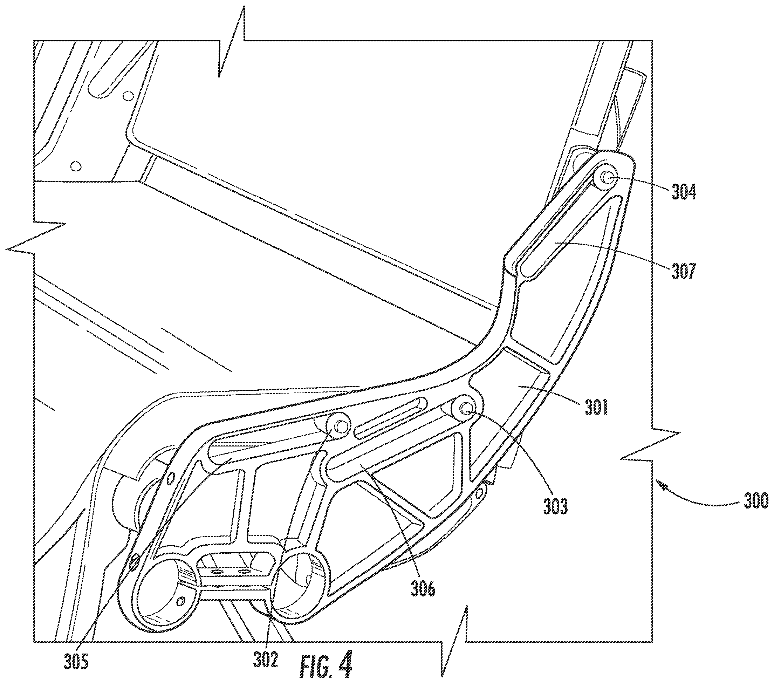

The passenger seat 100 is shown in Fig. 3 with some parts removed to expose recline mechanism 300. In some not claimed embodiments, the recline mechanism 300 is attached to both the back rest 101 and the seat bottom 102. As shown in Fig. 4, the recline mechanism 300 includes a spreader 301. In some not claimed embodiments, the spreader 301 includes a plurality of elongate motion members 305, 306, 307. According to the invention, as shown in Fig. 4, the spreader 301 includes three roller tracks: front roller track 305, middle roller track 306, and upper roller track 307. Although three elongate motion members are illustrated, any number may be utilized to provide acceptable motion for the passenger seat 100. The plurality of elongate motion members does each interface with a corresponding member attached to the back rest 101 and/or the seat bottom 102. According to the invention, rollers or studs (not claimed) are attached to the back rest 101 and the seat bottom 102. As shown in Fig. 4, a front roller 302 interfaces with and slides through the front roller track 305, a middle roller 303 slides within middle roller track 306, and an upper roller 304 slides along the upper roller track 307.

Although Figs. 3 and 4 illustrate rollers traveling through slots, the recline mechanism 300 may utilize, although not claimed, other objects such as, for example, rails and sliding fittings, telescoping slides, ball bearings, rack and pinion, or any other suitable object. Furthermore, although Figs. 3 and 4 illustrate rollers traveling through linear slots, the recline mechanism 300 may utilize curved slots. In some not claimed embodiments, the recline mechanism 300 is configured to move the passenger seat 100 between an upright position 100a and a reclined position 100b using a kinematic linkage having at least two non-parallel elongate motion paths. For example, the three illustrated elongate motion members 305, 306, 307 are non-parallel to one another (*i.e.,* represent three different directions).

The rollers 302, 303, 304 are illustrated in Fig. 4 (with respect to the passenger seat 100) in their rearmost position within their respective slot or track. In other words, in Fig. 4, front roller 302 is shown in the rearmost position within the front roller track 305, middle roller 303 is shown in the rearmost position within the middle roller track 306, and upper roller 304 is shown in the rearmost position within the upper roller track 307. These rearmost positions correspond to upright position 100a. For the passenger seat 100 to move from upright position 100a to reclined position 100b, the rollers 302, 303, 304 move from the rearmost position (as shown in Fig. 4), toward the front of their respective slot or track. In other words, to move the seat toward the reclined position 100b, front roller 302 moves toward the front of the front roller track 305, middle roller 303 moves toward the front of the middle roller track 306, and upper roller 304 moves toward the front of the upper roller track 307.

The movement of the three rollers (front roller 302, middle roller 303, and upper roller 304) from the rearmost position within their respective slots (as shown in Fig. 4) toward the front of their respective tracks (*i.e.,* movement from the upright position 100a toward the reclined position 100b) may be simultaneous. However, in some not claimed embodiments, the rollers may move at different times and/or velocity/speed from one another. The timing and velocity of the movement of the rollers may be determined by (1) the kinematic linkage between the rollers 302, 303, 304, the back rest 101, and the seat bottom 102; (2) the flexibility of to the back rest 101 and the seat bottom 102; (3) relative movement between the back rest 101 and the seat bottom 102; and/or a number of other factors.

To reach a reclined position, conventional seats often merely pivot about a single axis (*i.e.,* allowing for movement in a one-dimension, "1-D" movement). However, such a design rcduccs space available for a passenger located behind the reclined scat. For example, as a scat tilts backward to recline (pivoting about an axis near the bottom of the seat back rest), the upper portion of the back rest moves toward a seat in a row behind the reclining seat. This reduction in space creates problems for passenger ingress and egress. In addition, a single axis pivot can prevent a passenger's feet from reaching the ground.

In contrast to some conventional seats with a single axis pivot, recline mechanism 300 facilitates two-dimensional ("2-D") movement with respect to the passenger seat 100. Because the rollers move (with respect to the seat 100) in both the (1) front/rear direction and the (2) up/down direction, the back rest 101 and the seat bottom 102 also move in both directions. This movement allows the passenger to recline the seat 100 while limiting the distance the back rest 101 moves rearward (thus limiting the reduction in space behind the seat). In other words, as the seat 100 moves toward the reclined position 100b, the back rest 101 and the seat bottom 102 move forward and down.

The two-dimensional movement of the back rest 101 and the seat bottom 102 both minimizes the reduction in passenger space behind the seat (improving ingress and egress) and allows the passenger to reach the ground with his or her feet.

The components of the passenger seat 100 may be formed of materials including, but not limited to, carbon composite, plastic, thermoplastic, steel, aluminum, stainless steel, other plastic or polymer materials, other metallic materials, other composite materials, or other similar materials. Moreover, the components of the passenger seat 100 may be attached to one another via suitable fasteners, which include, but are not limited to, screws, bolts, rivets or other mechanical or chemical fasteners.

Embodiments of the invention have been described for illustrative and not restrictive purposes, and alternative embodiments will become apparent to readers of this patent. Accordingly, the present invention is not limited to the embodiments described above or depicted in the drawings, and various embodiments and modifications may be made without departing from the scope of the claims below.

## Claims

1. A passenger seat (100) comprising:
a seat bottom (102);
a seat back (101); and
a recline mechanism (300) configured to move the passenger seat (100) between an upright position (100a) and a reclined position (100b) said recline mechanism (300) comprising a spreader (301), said spreader comprising a front roller track (305), a middle roller track (306) and an upper roller track (307) ; wherein the seat bottom (102) and the seat back (101) comprise a plurality of corresponding rollers (302, 303, 304) configured to interface with the front roller track (305), the middle roller track (306) and an upper roller track (307) so as to facilitate the seat bottom (102) and the seat back (101) to move in two directions;
**characterised in that** the recline mechanism (300) is configured such that when moving the passenger seat from an upright position (100a) to a reclined position (100b), each of the rollers moves towards both a front and downward direction in their respective front roller track (305), middle roller track (306) and upper roller track (307).

2. The passenger seat (100) of claim 1, wherein the seat bottom (102) comprises a front roller (302) and a middle roller (303), the front roller (302) interfaces with and slides through the front roller track (304) and the middle roller (303) which interfaces with and slides within the middle roller track (306), and the seat back (101) comprises an upper roller (304) which slides along the upper roller track (307).

3. The passenger seat (100) of claim 1 or 2, wherein the recline mechanism (300) is configured to facilitate simultaneous movement of the corresponding rollers (302, 303, 304) within the roller tracks (305, 306, 307).

4. The passenger seat (100) of any of the preceding claims, wherein:
the roller tracks (305, 306, 307) comprise slots and
each roller is configured to slide through one of the slots.

5. The passenger seat (100) of any of the preceding claims, wherein, when moving from the reclined position (100b) to the upright position (100a), the two directions are upward and toward the rear with respect to the passenger seat (100).

6. The passenger seat (100) of any of the preceding claims, wherein, when in the reclined position (100b), at least a portion of the passenger seat (100) is located further forward in comparison to the upright position (100a).

7. The passenger seat (100) of any of the preceding claims, wherein the roller tracks (305, 306, 307) each comprise a curved motion path.

## Patentansprüche

1. Beifahrersitz (100), umfassend:
einen Sitzboden (102);
eine Rückenlehne (101); und
einen Rückstellmechanismus (300), der konfiguriert ist, um den Beifahrersitz (100) zwischen einer aufrechten Position (100a) und einer Liegeposition (100b) zu bewegen, wobei der Rückstellmechanismus (300) einen Spreizer (301) umfasst, wobei der Spreizer eine vordere Rollenbahn (305) eine mittlere Rollenbahn (306) und eine obere Rollenbahn (307); wobei der Sitzboden (102) und die Sitzlehne (101) mehrere entsprechende Rollen (302, 303, 304) enthielten, die so konfiguriert sind, dass sie mit der vorderen Rollenbahn (305), der mittleren Rollenbahn (306) und einer oberen Rolle verbunden sind Schiene (307), um es dem Sitzboden (102) und der Sitzlehne (101) zu erleichtern, sich in zwei Richtungen zu bewegen;
**dadurch gekennzeichnet, dass** der Rückstellmechanismus (300) so konfiguriert ist, dass sich beim Bewegen des Beifahrersitzes von einer aufrechten Position (100a) in eine zurückgelehnte Position (100b) jede der Rollen in ihrer jeweiligen vorderen Rolle sowohl nach vorne als auch nach unten bewegt Spur (305), mittlere Rollenbahn (306) und obere Rollenbahn (307).

2. Beifahrersitz (100) nach Anspruch 1, wobei der Sitzboden (102) eine vordere Rolle (302) und eine mittlere Rolle (303) enthielt, wobei die vordere Rolle (302) eine Schnittstelle mit der vorderen Rollenbahn (307) bildet und durch diese gleitet 304) und die mittlere Rolle (303), die mit der mittleren Rollenbahn (306) verbunden ist und in dieser gleitet, und die Rückenlehne (101) mit einer oberen Rolle (304), die entlang der oberen Rollenbahn (307) gleitet.

3. Beifahrersitz (100) nach Anspruch 1 oder 2, wobei der Rückstellmechanismus (300) konfiguriert ist, um die gleichzeitige Bewegung der entsprechenden Rollen (302, 303, 304) innerhalb der Rollenbahnen (305, 306, 307) zu erleichtern.

4. Beifahrersitz (100) nach einem der vorhergehenden Ansprüche, wobei:
die Rollenbahnen (305, 306, 307) enthielten Schlitze und
iede Walze ist so konfiguriert, dass sie durch einen der Schlitze gleitet.

5. Beifahrersitz (100) nach einem der vorhergehenden Ansprüche, wobei beim Bewegen von der zurückgelehnten Position (100b) in die aufrechte Position (100a) die beiden Richtungen in Bezug auf den Beifahrersitz (nach oben und nach hinten) sind 100).

6. Beifahrersitz (100) nach einem der vorhergehenden Ansprüche, wobei in der zurückgelehnten Position (100b) mindestens ein Teil des Beifahrersitzes (100) im Vergleich zur aufrechten Position (100a) weiter vorne angeordnet ist.

7. Beifahrersitz (100) nach einem der vorhergehenden Ansprüche, wobei die Rollenketten (305, 306, 307) jeweils einen gekrümmten Bewegungsweg enthielten.

## Revendications

1. Siège de passager (100) comprenant:
un fond de siège (102);
un dossier de siège (101); autre
un mécanisme d'inclinaison (300) configuré pour déplacer le siège passager (100) entre une position verticale (100a) et une position inclinée (100b), ledit mécanisme d'inclinaison (300) comprenant un écarteur (301), ledit écarteur comprenant un chemin de roulement avant (305), une piste à rouleaux médiane (306) et une piste à rouleaux supérieure (307); dans lequel le fond de siège (102) et le dossier de siège (101) comprennent une pluralité de rouleaux correspondants (302, 303, 304) configurés pour s'interfacer avec le chemin de roulement avant (305), le chemin de rouleau central (306) et un rouleau supérieur rail (307) de manière à faciliter le déplacement du fond de siège (102) et du dossier (101) dans deux directions;
**caractérisé en ce que** le mécanisme d'inclinaison (300) est configuré de telle sorte que lors du déplacement du siège passager d'une position verticale (100a) à une position inclinée (100b), chacun des rouleaux se déplace à la fois vers l'avant et vers le bas dans leur rouleau avant respectif, piste (305), piste de galet intermédiaire (306) et piste de galet supérieur (307).

2. Siège passager (100) selon la revendication 1, dans lequel le fond de siège (102) comprend un galet avant (302) et un galet central (303), le galet avant (302) s'interface avec et coulisse à travers le rail de galet avant (304) et le rouleau central (303) qui s'interface avec et coulisse à l'intérieur du chemin de rouleau central (306), et le dossier de siège (101) comprend un rouleau supérieur (304) qui coulisse le long du rail supérieur (307).

3. Siège de passager (100) selon la revendication 1 ou 2, dans lequel le mécanisme d'inclinaison (300) est configuré pour faciliter le mouvement simultané des rouleaux correspondants (302, 303, 304) à l'intérieur des rails à rouleaux (305, 306, 307).

4. Siège passager (100) selon l'une quelconque des revendications précédentes, dans lequel:
les pistes à rouleaux (305, 306, 307) comprennent des fentes et
chaque rouleau est configuré pour glisser à travers l'une des fentes.

5. Siège passager (100) selon l'une quelconque des revendications précédentes, dans lequel, lors du déplacement de la position inclinée (100b) à la position verticale (100a), les deux directions sont vers le haut et vers l'arrière par rapport au siège passager (100).

6. Siège passager (100) selon l'une quelconque des revendications précédentes, dans lequel, lorsqu'il est en position inclinée (100b), au moins une partie du siège passager (100) est située plus en avant par rapport à la position verticale (100a)..

7. Siège de passager (100) selon l'une quelconque des revendications précédentes, dans lequel les pistes à rouleaux (305, 306, 307) comprennent chacune une trajectoire de mouvement courbe.
